# EUROPÄISCHE PATENTANMELDUNG

(11) **EP 3 159 712 A1**
(43) Veröffentlichungstag der Anmeldung: **26.04.2017**
(21) Anmeldenummer: 16194327.9
(22) Anmeldetag: 18.10.2016
(51) Int. Cl.: G01S 17/42, G01S 17/93, G01S 7/481, G01S 7/497

(54) **VERFAHREN ZUM VERBINDEN EINER SENDERBAUGRUPPE UND EINER EMPFÄNGERBAUGRUPPE ZU EINER SENDE- UND EMPFANGSKOMBINATION EINER OPTOELEKTRONISCHEN DETEKTIONSEINRICHTUNG SOWIE EINER DETEKTIONSEINRICHTUNG UND KRAFTFAHRZEUG DAMIT**

(30) Priorität: 22.10.2015 DE 102015117986
(71) Anmelder: Valeo Schalter und Sensoren GmbH, 74321 Bietigheim-Bissingen (DE)
(72) Erfinder: Horvath, Peter, 74321 Bietigheim-Bissingen (DE); List, Gerald, 74321 Bietigheim-Bissingen (DE); Popescu, Sorin, 74321 Bietigheim-Bissingen (DE)

(57) **Zusammenfassung**

Die Erfindung betrifft ein Verfahren zum Verbinden einer Senderbaugruppe (21) und einer Empfängerbaugruppe (22) in einer Rahmenstruktur (20) zu einer Sende- und Empfangskombination einer abtastenden optoelektronischen Detektionseinrichtung, nämlich eines Laserscanners (2,3). Die Senderbaugruppe (21) weist mindestens ein erstes Verbindungselement (25), die Empfängerbaugruppe (2) mindestens ein zweites Verbindungselement (25) und die Rahmenstruktur (20) mindestens ein drittes Verbindungselement (25) auf. Zudem ist mindestens eine Verbindungsanordnung (30) vordefiniert, der mindestens zwei unterschiedliche der Verbindungselemente (25) zugeordnet sind. Zum Verbinden werden zunächst die Senderbaugruppe (21) und die Empfängerbaugruppe (22) zueinander in der Rahmenstruktur (20) ausgerichtet (42). Dann erfolgt ein Verkleben (43) der Verbindungselemente (25) der mindestens einen Verbindungsanordnung (30).

Außerdem betrifft die Erfindung eine optoelektronische Detektionseinrichtung (2, 3).

## Beschreibung

Die Erfindung betrifft ein Verfahren zum Verbinden einer Senderbaugruppe und einer Empfängerbaugruppe zu einer Sende- und Empfangskombination einer optoelektronischen Detektionseinrichtung, nämlich eines Laserscanners, gemäß dem Oberbegriff von Anspruchs 1. Die Erfindung betrifft ferner eine abtastende optoelektronische Detektionseinrichtung, nämlich einen Laserscanner, gemäß Anspruch 9 und ein Kraftfahrzeug mit einer solchen Detektionseinrichtung gemäß Anspruch 10.

Im Automobilbereich werden zunehmend unterschiedlichste Fahrerassistenzsysteme eingesetzt, das heißt elektronische Zusatzeinrichtungen zur Unterstützung des Fahrers in bestimmten Fahrsituationen. Laser-basierte Systeme, auch unter der Bezeichnung LIDAR ("Light detection and ranging") bekannt, dienen der optischen Abstands- und Geschwindigkeitsmessung und ermöglichen die Erkennung von Objekten in einer relativ großen Reichweite bis etwa 200 Meter vom Fahrzeug mit einer hohen Messgenauigkeit. Die Detektionseinrichtung, beispielsweise ein Laserscanner, wird beispielsweise im vorderen Bereich des Fahrzeugs platziert, wie etwa hinter der Windschutzscheibe, oder am Kühlergrill, um unter anderem die Zeit bis zum Aufprall zu ermitteln. Solche Systeme können aber auch im seitlichen Bereich des Fahrzeugs platziert werden, um insbesondere den Totwinkel des Kraftfahrzeugs zu überwachen.

Ein Laserscanner arbeitet nach dem Lichtlaufprinzip, wobei elektromagnetische Strahlen (Laserpulse) ausgesendet werden und die von einem Zielobjekt in der Umgebung des Fahrzeugs reflektierten Strahlen detektiert werden. Bekannte Laserscanner weisen eine Sende- und Empfangskombination auf, welche einen optischen Sender zum Aussenden elektromagnetischer Strahlen und einen optoelektronischen Detektor zum Empfangen von reflektierten Strahlen und zur Bereitstellung eines elektrischen Empfangssignals in Abhängigkeit der empfangenen Strahlen aufweist. Dabei werden die ausgesendeten elektromagnetischen Strahlen (kurze Laserpulse) über einen schwenkbaren Spiegel so abgelenkt, dass eine Abtastung des gesamten Sichtfelds innerhalb eines bestimmten Abtastwinkelbereichs stattfindet. Pro Abtastwinkel wird dabei ein Laserimpuls ausgesendet. Im selben Winkelschritt werden die reflektierten Strahlen mittels des optoelektronischen Detektors empfangen und ein entsprechendes elektrisches Empfangssignal bereitgestellt. Während Echos, beziehungsweise Pulse, im Empfangssignal erkannt, so sind diese grundsätzlich auf Reflektionen der ausgesendeten Strahlen an Zielobjekten in der Umgebung zurückzuführen. Die Laufzeit zwischen dem Aussenden und dem Empfangen des Echos ist proportional zur Distanz zum Objekt. Aus der Lichtlaufzeitmessung wird die Entfernung für den jeweiligen Winkelschritt ermittelt.

Der optische Sender und der optoelektronische Detektor bilden eine Sende- und Empfangskombination der optoelektronischen Detektionseinrichtung, das heißt den Laserscanner. Die Sende- und Empfangskombination wird auch als Transceiver bezeichnet. Im Folgenden wird der optische Sender auch als Senderbaugruppe und die optoelektronische Detektionseinrichtung als Empfängerbaugruppe bezeichnet.

Der optische Sender und der optoelektronische Detektor müssen dabei auf einander abgestimmt beziehungsweise abgeglichen werden, um ein Scannen nach dem Prinzip der Lichtlaufzeitmessung zu gewährleisten.

DE 102 044 638 A1 offenbart eine optoelektronische Erfassungseinrichtung, insbesondere einen Laserscanner, mit einem Sender zur Aussendung gepulster elektromagnetischer Strahlung, einen dem Sender zugeordneten Empfänger und wenigstens eine Ablenkeinrichtung. Mit der Ablenkeinrichtung ist die von dem Sender ausgesandte Strahlung in einen Überwachungsbereich und die aus dem Überwachungsbereich reflektierte Strahlung auf den Empfänger lenkbar. Ferner ist eine zentrale Rahmenstruktur vorgesehen, mit der eine dem Sender und dem Empfänger zugeordnete Senderbaugruppe mit einer Sendeoptik und einer Empfängerbaugruppe mit einer Empfangsoptik fest verbunden ist, wobei an der Rahmenstruktur Verbindungselemente für die Senderbaugruppe und den Empfängerbaugruppe angebracht sind, über die die Senderbaugruppe und den Empfängerbaugruppe an der Rahmenstruktur jeweils in einer Sollausrichtung bezüglich der Sende- und Empfangsoptik fixierbar sind.

Bei der Justage wird die Senderbaugruppe ausgerichtet und mittels Fixierschrauben an der Rahmenstruktur fixiert, sobald die Sollstellung erreicht ist. Anschließend erfolgt die Ausrichtung der Empfängerbaugruppe, wobei auch die endgültige Fixierung der Empfängerbaugruppe relativ zur Rahmenstruktur durch Fixierschrauben erfolgt.

Im weiteren Stand der Technik ist auch die Fixierung mittels Lötverbindungen beschrieben.

Ein Nachteil der bekannten Justierverfahren ist, dass diese sehr zeitaufwändig durchzuführen sind, dabei muss nämlich immer der Verzug, der durch die Wärme beim Verlöten entsteht und zu einer Fehljustierung führen kann, berücksichtigt werden. Beim Fixieren durch Fixierschrauben besteht die Gefahr, dass sich einzelne Bauteile verformen, sodass ebenfalls eine Fehljustierung entsteht.

Zudem ist die Fixierung nicht für den Einsatz in einem Kraftfahrzeug hinreichend beständig. Beim Einsatz von Fixierschrauben besteht die Gefahr, dass sich diese lösen können. Lötverbindungen sind empfindlich gegenüber Temperaturschwankungen und Vibrationen.

Daher ist es die Aufgabe der vorliegenden Erfindung, ein Verfahren anzugeben und eine optoelektronische Detektionseinrichtung zu finden, das bzw. die für eine wirtschaftliche Fertigung in Großserien geeignet ist und das bzw. die sich bei einem Einsatz in einem Kraftfahrzeug nicht infolge unzureichender Fixierung nach oder bereits bei der Justage verstellt.

Diese Aufgabe wird erfindungsgemäß durch ein Verfahren zum Verbinden einer Senderbaugruppe und einer Empfängerbaugruppe mit den Merkmalen von Anspruch 1 und durch eine optoelektronische Detektionseinrichtung nach Anspruch 9 gelöst. Es kann ein Kraftfahrzeug mit einer solchen Detektionseinrichtung vorgesehen sein.

Erfindungsgemäß wird einer Senderbaugruppe und einer Empfängerbaugruppe in einer Rahmenstruktur zu einer Sende- und Empfangskombination einer abtastenden optoelektronischen Detektionseinrichtung, insbesondere eines Laserscanners, verbunden. Die Senderbaugruppe umfasst mindestens ein erstes Verbindungselement, die Empfängerbaugruppe mindestens ein zweites Verbindungselement und die Rahmenstruktur mindestens ein drittes Verbindungselement.

Außerdem ist mindestens eine Verbindungsanordnung vordefiniert. Der Verbindungsanordnung sind mindestens zwei unterschiedliche der Verbindungselemente zugeordnet. Bei den Verbindungselementen, die einer Verbindungsanordnung zugeordnet sind, handelt es sich demnach um mindestens zwei oder drei unterschiedliche Verbindungselemente. Demnach sind das erste, zweite und dritte Verbindungselement jeweils zueinander unterschiedliche Verbindungselemente.

Eine Verbindungsanordnung umfasst also ein erstes und ein zweites, ein erstes und ein drittes, ein zweites und ein drittes oder ein erstes und ein zweites und ein drittes Verbindungselement. Ferner ist mindestens eine Verbindungsanordnung definiert. Es können also ein, zwei, drei, vier noch mehr Verbindungsanordnungen vorgesehen sein.

Erfindungsgemäß werden zum Verbinden zunächst die Senderbaugruppe und die Empfängerbaugruppe zueinander in der Rahmenstruktur ausgerichtet. Die Empfängerbaugruppe und die Senderbaugruppe werden also in geeigneter Weise zueinander angeordnet, wobei dies in der Rahmenstruktur erfolgt. Nach der Ausrichtung werden die Verbindungselemente der mindestens einen Verbindungsanordnung verklebt.

Es sind also ein oder mehrere Verbindungsanordnungen vorgesehen, wobei die Verbindungselemente jeder Verbindungsanordnung jeweils miteinander verklebt werden.

Die Verbindungselemente sowie die Empfängerbaugruppe, die Senderbaugruppe und die Rahmenstruktur sind in Ihrer Form so aufeinander abgestimmt, dass die Verklebung die Verbindungselemente einer Verbindungsanordnung fest miteinander verbindet.

Durch das Ausführen der Schritte wird das Herstellen einer Verbindung einer Empfängerbaugruppe und einer Senderbaugruppe möglich, das für eine wirtschaftliche Fertigung in Großserien geeignet ist. Das Verkleben erfolgt in kurzer Zeit und es wird keine hohe Temperatur hierfür benötigt, ferner werden auch keine Kräfte auf die Bauteile ausgeübt, die zu einer Verformung der Bauteile führen können. Die Verbindung ist außerdem zum Einsatz in einem Kraftfahrzeug geeignet, da eine feste Fixierung durch das Verkleben erfolgt.

Gemäß einer Ausführungsform wird durch das Verkleben eine nicht-lösbare Verbindung hergestellt. Eine nicht-lösbare Verbindung ist eine Verbindung, die nur durch Zerstörung gelöst werden kann. Eine derartige Verbindung ist besonders stabil und zum Einsatz in Kraftfahrzeugen besonders gut geeignet, da diese durch Vibrationen und Erschütterungen stabil bleibt.

Gemäß einer weiteren Ausführungsform erfolgt das Verkleben mittels Klebstoff, der insbesondere UV-härtender Klebstoff ist. Dieser Klebstoff ist besonders vorteilhaft, da er durch UV-Strahlung ausgehärtet werden kann, wobei hierfür keine Hitzezufuhr nötig ist, die Auswirkungen auf die Bauteile haben kann. Außerdem ist der Zeitpunkt, zu dem die Aushärtung erfolgen soll, genau definierbar.

Gemäß einer bevorzugten Ausführungsform wird das Ausrichten mittels eines Justieraufbaus durchgeführt. Der Justieraufbau umfasst dazu einen Manipulator, der an Angriffsabschnitte der Senderbaugruppe und/oder der Empfängerbaugruppe angreift.

Demnach werden z.B. die Rahmenstruktur und die Senderbaugruppe in geeigneter Weise zueinander ausgerichtet und in einer Halterung gehalten. Dann wird mit dem Manipulator die Empfängerbaugruppe solange bewegt, bis die Sende- und Empfangsstrahlen wie gewünscht ausgelenkt sind.

Hierdurch ist eine automatische Justierung oder Ausrichtung der Senderbaugruppe und der Empfängerbaugruppe in der Rahmenstruktur möglich.

Gemäß einer weiteren vorteilhaften Ausführungsform werden die Senderbaugruppe und die Empfängerbaugruppe so zueinander ausgerichtet, dass Sende- und Empfangsstrahlen, also insbesondere die Strahlengänge der Senderbaugruppe und der Empfängerbaugruppe, parallel zueinander verlaufen.

Gemäß einer Ausführungsform der Erfindung weist mindestens ein Verbindungselement mindestens einer Verbindungsanordnung eine Vertiefung oder einen Durchbruch und mindestens ein weiteres Verbindungselement derselben Verbindungsanordnung einen abragenden Abschnitt auf. Demnach sind Verbindungsanordnungen umfasst, die ein Verbindungselement mit einer Vertiefung oder einem Durchbruch und ein Verbindungselement mit einem abragenden Abschnitt aufweisen. Außerdem ist eine Verbindungsanordnung umfasst, die ein Verbindungselement mit einer Vertiefung oder einem Durchbruch und zwei Verbindungselemente mit einem abragenden Abschnitt aufweist. Ferner ist auch eine Verbindungsanordnung umfasst, die zwei Verbindungselement mit einer Vertiefung oder einem Durchbruch und ein Verbindungselement mit einem abragenden Abschnitt aufweist.

Hierbei werden vor oder bei dem zueinander Ausrichten oder Justieren der Senderbaugruppe und der Empfängerbaugruppe der oder die abragenden Abschnitte in dem Bereich der Vertiefung oder dem Durchbruch angeordnet. In dem Bereich bedeutet z.B., dass ein Verbindungselement, das einen abragenden Abschnitt aufweist, mit dem abragenden Abschnitt durch den Durchbruch eines weiteren Verbindungselements hindurchgeführt wird. Im Falle mehrere Verbindungselemente einer Verbindungsanordnung mit jeweils einem abragenden Abschnitt, werden dann beide abragenden Abschnitte durch den Durchbruch geführt.

Die Vertiefung oder der Durchbruch sowie die abragenden Abschnitte sind so aufeinander abgestimmt, dass lediglich eine lose in alle Richtungen gering, also um z.B. einen Millimeter oder weniger, verschiebbare Bewegung möglich ist. Somit ist also immer noch eine Justierung oder Ausrichtung der Baugruppen möglich, bevor die Verklebung erfolgt.

Gemäß einer weiteren bevorzugten Ausführungsform weist einer der abragenden Abschnitte eine L-Form auf, wobei zumindest ein Teil der L-Form in dem Bereich der Vertiefung oder dem Durchbruch angeordnet wird. Eine L-Form ist vorteilhaft, da so ein einfaches Einschieben aller Verbindungselemente gleichzeitig erfolgen kann, wenn die Kanten der L-Form in die gleich Richtung zeigen.

Gemäß einer weiteren vorteilhaften Ausführungsform wird eine Linse an der Senderbaugruppe fokussiert und daraufhin mit der Senderbaugruppe verklebt. Das Verkleben erfolgt beispielsweise wieder mit einem Klebstoff, insbesondere mit einem UV-härtendem Klebstoff. Dadurch ist auch das Fixieren der Linse einfach möglich, ohne dass Hitze entwickelt wird, die zur Zerstörung der Linse führen köönte.

Ferner umfasst die Erfindung eine Detektionseinrichtung mit einer Senderbaugruppe und einer Empfängerbaugruppe, wobei die Senderbaugruppe und die Empfängerbaugruppe mit einem Verfahren nach einem der vorhergehenden Ausführungsformen miteinander verbunden sind.

Zuletzt umfasst die Erfindung ein Kraftfahrzeug mit der erfindungsgemäßen Detektionseinrichtung.

Ausführungsbeispiele der Erfindung sind nachstehend anhand der Zeichnung näher erläutert. Es zeigen:
- Fig. 1: eine Draufsicht auf ein Kraftfahrzeug mit einer optischen Messvorrichtung mit mehreren Laserscannern,
- Fig. 2: eine perspektivische Ansicht eines Ausführungsbeispiels einer optoelektronischen Detektionseinrichtung mit noch nicht angeordneter Empfängerbaugruppe,
- Fig. 3: eine perspektivische Ansicht eines Ausführungsbeispiels einer optoelektronischen Detektionseinrichtung,
- Fig. 4: die Verfahrensschritte eines Ausführungsbeispiels der Erfindung

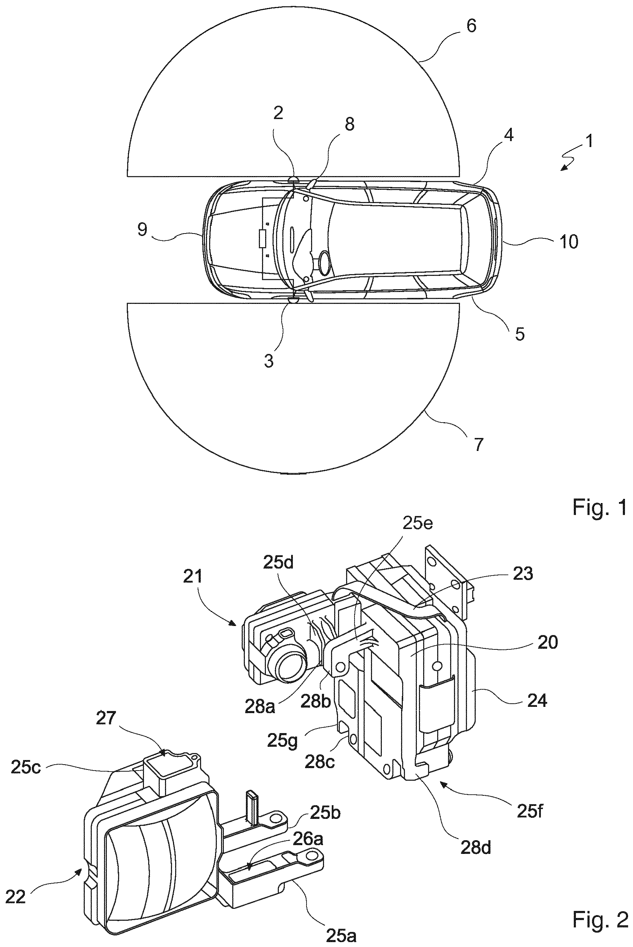

Fig. 1 zeigt eine Draufsicht eines Kraftfahrzeugs 1 mit einer optischen Messvorrichtung zur Erkennung von Zielobjekten im Umfeld des Kraftfahrzeugs 1. Die optische Messvorrichtung umfasst im gezeigten Ausführungsbeispiel zwei optoelektronische Detektionseinrichtungen, nämlich Laserscanner 2, 3. Die Laserscanner 2, 3 sind im gezeigten Ausführungsbeispiel an den Seiten 4, 5 des Kraftfahrzeugs 1 angeordnet. Die Laserscanner 2, 3 ragen dabei aus der Karosserie des Kraftfahrzeugs 1 hervor und erfassen jeweils ein seitliches Sichtfeld 6, 7 des Kraftfahrzeugs 1. Die Laserscanner 2, 3 können dabei in die Außenspiegel 8 des Kraftfahrzeugs 1 integriert sein.

Die Laserscanner 2, 3 weisen jeweils ein Fenster auf, durch welches Laserstrahlen zum Scannen des jeweiligen Sichtfelds 6, 7 auf die zu erfassende Szene ausgesendet werden und an Zielobjekten reflektierte Strahlen in das Gehäuse des Laserscanners 2, 3 eindringen können. Das Fenster ist in einem Ausführungsbeispiel durch eine Abdeckscheibe abgedeckt. Die Abdeckscheibe ist vorteilhaft nur im Spektralbereich der elektromagnetischen Strahlen transparent ausgebildet, das heißt vorzugsweise im Infrarotbereich. Die Abdeckscheibe dient somit als Sperrfilter für Tageslicht.

Alternativ oder zusätzlich zu der Anordnung von Laserscannern 2, 3 an den Seiten 4, 5 des Kraftfahrzeugs 1 können Laserscanner an der Front 9 und/ oder am Heck 10 des Kraftfahrzeugs 1 angeordnet sein.

Fig. 2 zeigt eine optoelektronische Detektionseinrichtung, nämlich einen Laserscanner 2, 3 in perspektivischer Ansicht. Der Laserscanner umfasst eine Rahmenstruktur 20, eine Senderbaugruppe 21 und eine Empfängerbaugruppe 22. Die Senderbaugruppe 21 ist bereits an der Rahmenstruktur 20 angeordnet und über eine elektrische Verbindung 23 mit einer weiteren Elektronikbaugruppe 24 verbunden. Dennoch ist die Senderbaugruppe 21 bislang nur lose an der Rahmenstruktur 20 angeordnet.

Die Senderbaugruppe 21, die Rahmenstruktur 20 und die Empfängerbaugruppe 22 weisen jeweils Verbindungselemente 25a bis 25g auf. Die Verbindungselemente 25a und 25b weisen einen Durchbruch 26a 26b auf, wobei der Durchbruch 26b des Verbindungselements 25b aufgrund der Darstellung nicht sichtbar ist. Das Verbindungselement 25c weist eine Vertiefung 27 auf. Zuletzt weisen die Verbindungselemente 25d bis 25g jeweils einen abragenden Abschnitt 28a bis 28d auf.

Das Verbindungselement 25d entspricht hier einem ersten Verbindungselement 25d, die Verbindungselemente 25a bis 25c jeweils einem zweiten Verbindungselement 25a bis 25c und die Verbindungselemente 25e bis 25g jeweils einem dritten Verbindungselement 25e bis 25g.

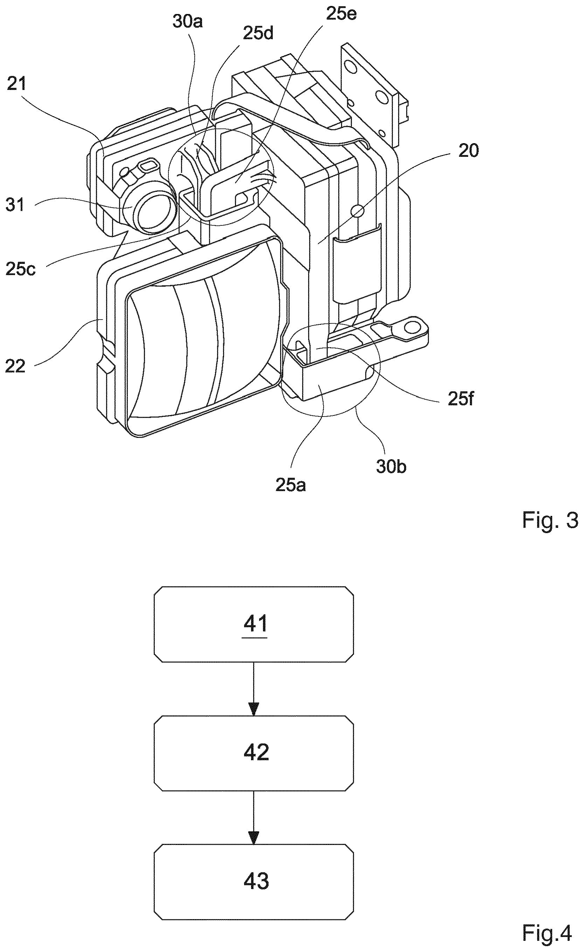

Fig. 3 zeigt ein weiteres Ausführungsbeispiel der optoelektronische Detektionseinrichtung, nämlich des Laserscanners 2, 3 aus Fig. 2, wobei in diesem Ausführungsbeispiel auch die Empfängerbaugruppe 22 an der Rahmenstruktur 20 und an der Senderbaugruppe 21 angeordnet ist. Hierbei wurden die abragenden Abschnitte 28a, 28b des ersten Verbindungselements 25d und des dritten Verbindungselements 25e in die Vertiefung 27 des zweiten Verbindungselements 25c eingeführt. Die Verbindungselemente 25c bis 25e sind also einer Verbindungsanordnung 30a zugeordnet.

Außerdem ist der abragende Abschnitt 28d, des dritten Verbindungselements 25f in den Durchbruch 26a des zweiten Verbindungselements 25a eingeführt, sodass diese Verbindungselemente 25a und 25f einer weiteren Verbindungsanordnung 30b zugeordnet sind. Zuletzt ist der abragende Abschnitt 28c, des dritten Verbindungselements 25g in den Durchbruch 26b des zweiten Verbindungselements 25b eingeführt, was aufgrund der Darstellung nicht sichtbar ist.

Die Verbindungselemente 25a bis 25g sind lose zueinander angeordnet, sodass nun eine Justierung der Senderbaugruppe 21 zur Empfängerbaugruppe 22 erfolgen kann. Sobald die Justierung abgeschlossen ist, werden die Verbindungselemente 25a bis 25g innerhalb ihrer Verbindungsanordnungen 30a, 30b miteinander verklebt. Hierzu wird ein UV-härtender Klebstoff jeweils so an den Verbindungselementen 25a bis 25g einer Verbindungsanordnung 30a, 30b verteilt, dass dieser alle Verbindungselementen 25a bis 25g berührt. Dann wird mit einer UV-Lichtquelle der Klebstoff ausgehärtet, sodass die Verbindungselementen 25a bis 25g einer Verbindungsanordnung 30a, 30b fest miteinander und somit die Senderbaugruppe 21 und die Empfängerbaugruppe 22 miteinander und an der Rahmenstruktur 20 fest verbunden sind.

Gleichzeitig wird auch eine Linse 31, die zuvor fokussiert wurde, genauso wie die Verbindungselemente 25a bis 25g mit der Senderbaugruppe 21 verklebt.

Fig. 4 zeigt die Schritte eines Ausführungsbeispiels der Erfindung. Im ersten Schritt 41 werden die Senderbaugruppe 21, die Empfängerbaugruppe 22 und die Rahmenstruktur 20 aneinander angeordnet, sodass die Verbindungselementen 25a bis 25g der Verbindungsanordnungen 30a, 30b zueinander angeordnet sind. Dann werden die Senderbaugruppe 21 und die Empfängerbaugruppe 22 zueinander justiert oder ausgerichtet 42. Sobald die Justage 42 abgeschlossen ist, werden die Verbindungselemente 25a bis 25g innerhalb ihrer Verbindungsanordnungen 30a, 30b durch Verkleben 43 miteinander verbunden.

## Patentansprüche

1. Verfahren zum Verbinden einer Senderbaugruppe (21) und einer Empfängerbaugruppe (22) in einer Rahmenstruktur (20) zu einer Sende- und Empfangskombination einer abtastenden optoelektronischen Detektionseinrichtung, insbesondere eines Laserscanners (2,3), wobei die Senderbaugruppe (21) mindestens ein erstes Verbindungselement (25), die Empfängerbaugruppe (22) mindestens ein zweites Verbindungselement (25) und die Rahmenstruktur (20) mindestens ein drittes Verbindungselement (25) aufweist und mindestens eine Verbindungsanordnung (30) vordefiniert ist, der mindestens zwei unterschiedliche der Verbindungselemente (25) zugeordnet sind, **dadurch gekennzeichnet, dass** das Verfahren folgende Schritte umfasst:
- Ausrichten (42) der Senderbaugruppe (21) und der Empfängerbaugruppe (22) zueinander in der Rahmenstruktur (20),
- Verkleben (43) der Verbindungselemente (25) der mindestens einen Verbindungsanordnung (30).

2. Verfahren nach Anspruch 1,
**dadurch gekennzeichnet, dass** durch das Verkleben (43) eine nicht-lösbare Verbindungen hergestellt wird.

3. Verfahren nach Anspruch 1 oder 2,
**dadurch gekennzeichnet, dass** das Verkleben (43) mittels Klebstoff, insbesondere UV-härtendem Klebstoff, erfolgt.

4. Verfahren nach einem der vorhergehenden Ansprüche,
**dadurch gekennzeichnet, dass** das Ausrichten (42) mittels eines Justieraufbaus durchgeführt wird, wobei der Justieraufbau einen Manipulator umfasst, der an Angriffsabschnitte der Senderbaugruppe (21) und/oder der Empfängerbaugruppe (22) angreift.

5. Verfahren nach einem der vorhergehenden Ansprüche,
**dadurch gekennzeichnet, dass** die Senderbaugruppe (21) und die Empfängerbaugruppe (22) so zueinander ausgerichtet werden, dass Sende- und Empfangsstrahlen, also insbesondere die Strahlengänge der Senderbaugruppe (21) und der Empfängerbaugruppe (22), parallel zueinander verlaufen.

6. Verfahren nach einem der vorhergehenden Ansprüche,
**dadurch gekennzeichnet, dass** mindestens ein Verbindungselement (25) mindestens einer Verbindungsanordnung (30) eine Vertiefung (27) oder einen Durchbruch (26) und mindestens ein weiteres Verbindungselement (30) derselben Verbindungsanordnung (30) einen abragenden Abschnitt (28) aufweist und vor oder bei dem zueinander Ausrichten (42) der Senderbaugruppe (21) und der Empfängerbaugruppe (22) der oder die abragenden Abschnitte (28) in den Bereich der Vertiefung (27) oder den Durchbruch (26) angeordnet (41) werden.

7. Verfahren nach Anspruch 6,
**dadurch gekennzeichnet, dass** mindestens einer der abragenden Abschnitte (28) eine L-Form aufweist und zumindest ein Teil der L-Form in dem Bereich der Vertiefung (27) oder dem Durchbruch (26) angeordnet wird.

8. Verfahren nach einem der vorhergehenden Ansprüche,
**dadurch gekennzeichnet, dass** eine Linse (31) an der Senderbaugruppe (21) fokussiert und daraufhin mit der Senderbaugruppe (21) verklebt (43) wird.

9. Abtastende optoelektronische Detektionseinrichtung (2,3) mit einer Senderbaugruppe (21) und einer Empfängerbaugruppe (22), die miteinander verbunden in einer in einer Rahmenstruktur (20) der Detektionseinrichtung (2,3) angeordnet sind, wobei die Senderbaugruppe (21) mindestens ein erstes Verbindungselement (25), die Empfängerbaugruppe (22) mindestens ein zweites Verbindungselement (25) und die Rahmenstruktur (20) mindestens ein drittes Verbindungselement (25) aufweist und mindestens eine Verbindungsanordnung (30) vordefiniert ist, der mindestens zwei unterschiedliche der Verbindungselemente (25) zugeordnet sind, **dadurch gekennzeichnet, dass**
- die Senderbaugruppe (21) und die Empfängerbaugruppe (22) zueinander in der Rahmenstruktur (20) ausgerichtet sind und
- die Verbindungselemente (25) der mindestens einen Verbindungsanordnung (30) miteinander verklebt sind.

10. Detektionseinrichtung nach Anspruch 9,
**dadurch gekennzeichnet, dass** die Senderbaugruppe (21) und die Empfängerbaugruppe (22) mit einem Verfahren nach einem der Ansprüche 1 bis 8 in einer Rahmenstruktur (20) miteinander verbunden sind.
